# EUROPÄISCHE PATENTSCHRIFT

(11) **EP 0 421 178 B1**
(45) Veröffentlichungstag und Bekanntmachung des Hinweises auf die Patenterteilung: **07.07.1993**
(21) Anmeldenummer: 90117812.9
(22) Anmeldetag: 15.09.1990
(51) Int. Cl.: G01G 11/00

(54) **Verfahren und Vorrichtung zur Bestimmung des Gewichts von rieselfähigen Schüttgütern**
Method and apparatus for determining the weight of bulk materials
Procédé et dispositif de pesage de produits en vrac

(30) Priorität: 04.10.1989 DE 3933122
(43) Veröffentlichungstag der Anmeldung: 10.04.1991
(73) Patentinhaber: KALI UND SALZ AKTIENGESELLSCHAFT, D-34111 Kassel (DE)
(72) Erfinder: Wempe, Jörg, D-6430 Bad Hersfeld (DE); Mehnert, Walter, D-6432 Heringen 1 (DE); Jahn, Claus, D-6432 Heringen 1 (DE)

(56) Entgegenhaltungen:
- DE-A- 3 217 406
- DE-C- 909 049
- DE-C- 3 201 939
- FR-A- 2 557 972

## Beschreibung

Die Erfindung betrifft ein Verfahren und eine Vorrichtung zur Bestimmung des Gewichts eines rieselfähigen Schüttgutes.

Es ist eine Vorrichtung zum kontinuierlichen Wiegen von kontinuierlich zugeführtem Gut bekannt, bei der unter einem das Gut aufnehmenden Trichter mehrere zylindrische Behälter untereinander angeordnet sind, welche in mehrere sektorförmige Abteile aufgeteilt sind. Dabei sind der oberste und der unterste Behälter mit umlaufenden Drehscheiben mit Sektoröffnungen versehen (DE-PS 32 01 939).

Wenn bei dieser Vorrichtung die Öffnung in der Drehscheibe zwischen Trichter und oberstem Behälter zu einem bestimmten Abteil ausgerichtet steht, fällt das Gut in dieses Abteil; gleichzeitig befindet sich die Öffnung in der Drehscheibe zwischen oberstem und darunterliegendem Behälter in Ausrichtung zu einem anderen Abteil des obersten Behälters, so daß das darin befindliche Gut in das entsprechende Abteil des darunterliegenden Behälters fällt. Bei kontinuierlicher Drehung der Drehscheiben wird jeweils die Hälfte der Abteile des obersten Behälters gefüllt und die andere Hälfte in die Abteile des darunterliegenden Behälters eingegeben.
Dieser Vorgang setzt sich im wesentlichen in bezug auf die Füllung und Leerung der Abteile des untersten Behälters fort. Dies hat zur Folge, daß das Volumen des zu wiegenden Gutes in der Maschine im wesentlichen konstant bleibt, so daß das Gewicht des während einer bestimmten Zeitdauer die Vorrichtung verlassenden Gutes einfach dadurch berechnet werden kann, daß man die Anzahl der Umdrehungen der Drehscheiben pro Zeiteinheit zählt.

Der Bauaufwand für eine solche Vorrichtung zum Wiegen des kontinuierlich zugeführten Gutes ist aber recht erheblich.

Der Erfindung liegt daher die Aufgabe zugrunde, ein Verfahren zur Bestimmung des Gewichts eines rieselfähigen Schüttgutes zu schaffen, das einfacher in der Durchführung und weniger bauaufwendig ist.

Das Verfahren ist dadurch gekennzeichnet, daß eine bekannte Probemenge des Schüttgutes aus einem Behälter auf einer schrittweise bewegten Unterlage abgelegt und die Schrittbewegung der Unterlage so lange aufrechterhalten wird, bis der Behälter leer ist, worauf die Anzahl der Schritte festgestellt wird.
Ist also die Probemenge bekannt, beispielsweise 305 g, und hat man die Anzahl der Schritte festgestellt, beispielsweise 1531 Schritte, bis der Behälter leer ist, dann kann festgestellt werden, wieviel Gramm einem Schritt zuzuordnen ist; das ist in diesem Fall 1531 : 305, d.h. 5,02 Schritte pro Gramm (Schrittgewicht).

Mit dem gleichen Material könnten beliebig viele Wägungen vorgenommen werden, denn es kann aus der Zahl der gemessenen Schritte jeweils das Gewicht festgestellt werden.

Die Zahl der Schritte kann einem Rechner eingegeben werden, der dann mit Hilfe des Schrittgewichtes automatisch das Gewicht der durchgelaufenen Menge feststellen kann.

Die Vorrichtung zur Durchführung des Verfahrens ist gekennzeichnet durch einen Behälter mit einem unteren Auslaß und einem unter dem unteren Auslaß angeordneten Drehteller als Unterlage für die Aufnahme des Schüttgutes, sowie einem Schrittmotor für den Antrieb des Drehtellers. Der Drehteller ist dabei unmittelbar dicht an dem unteren Auslaß angeordnet.

Dabei ist die Vorrichtung mit einem Zählwerk ausgerüstet, das mit dem Schrittmotor zusammenarbeitet, damit die Schritte durch das Zählwerk gezählt werden können, Dabei kann das Zählwerk zugleich auch als Rechner ausgebildet sein, der bei entsprechender Eingabe des festgestellten-Schrittgewichtes das Gewicht der durchgelaufenen Menge angeben kann.

Nach einem weiteren Merkmal der Erfindung kann die Vorrichtung so ausgebildet sein, daß der Drehteller mit einem Abstreifer zusammenarbeitet, der das abgestreifte Gut in ein Aufnahmegefäß befördert, um zu Eichzwecken festzustellen, welches Gewicht in dem Behälter vorhanden war. Selbstverständlich kann auch vor Eingabe der Probemenge in den Behälter das Gewicht dieser Probemenge festgestellt werden.

Bei der Feststellung des Schrittgewichtes ist wichtig, daß genau festgestellt wird, wann der Behälter, in dem sich die bekannte Probemenge befindet, leer ist.

Zu diesem Zweck ist der Behälter mit einer Einrichtung zur Feststellung des Behälterleerzustands versehen, die mit dem Schrittmotor zusammenarbeitet.

Eine solche Einrichtung kann z.B. eine Lichtschranke oder ein anderes Sende- und Empfangssystem sein, die im Bereich des Drehtellers angebracht ist.

Zu diesem Zweck ist der Drehteller aus lichtdurchlässigem Material gefertigt, so daß beispielsweise mit Hilfe dieser Lichtschranke festgestellt werden kann, wann erstmalig der Drehteller leer ist. In diesem Fall sorgt dieses Sende- und Empfangssystem, insbesondere diese Lichtschranke, dafür, daß der Schrittmotor sofort ausgeschaltet wird.

Dadurch ist nunmehr ganz einfach festzustellen, wieviel Schritte notwendig waren, um den Behälter mit der bekannten Probemenge zu entleeren.

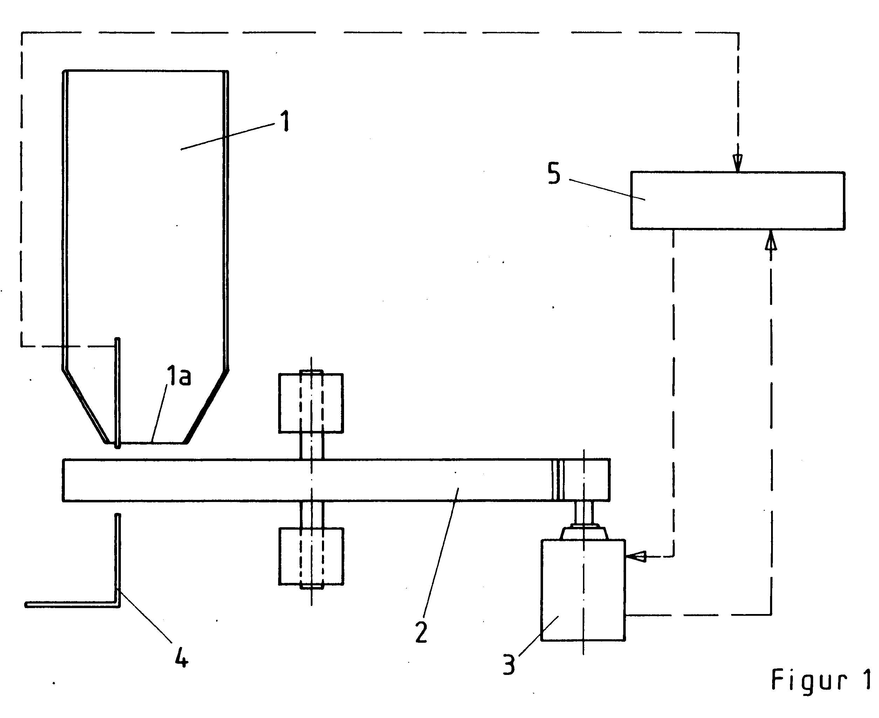

In der Zeichnung ist schematisch die Vorrichtung zur Durchführung des Verfahrens dargestellt.

Mit 1 ist der Behälter bezeichnet, in dem eine bekannte Probemenge enthalten ist. Der Behälter 1 besitzt den unteren Auslaß 1a. Unmittelbar unter diesem unteren Auslaß 1a ist ein Drehteller 2 angeordnet, der aus einem lichtdurchlässigen Material gefertigt ist.
Der Drehteller 2 wird durch einen schematisch dargestellten Schrittmotor 3 schrittweise angetrieben.
Der Drehteller stellt die Unterlage dar, auf dem das Schüttgut aus dem Behälter 1 abgelegt wird. Damit wird deutlich, daß bei schrittweiser Bewegung der Unterlage bzw. des Drehtellers 2 dieser mit Schüttgut beladen wird. Ist der Behälter leer, dann wird sofort der Schrittmotor abgestellt.

Das geschieht mit einer Einrichtung zur Feststellung des Behälterleerzustandes, nach der beispielsweisen Ausführungsform mit Hilfe einer Lichtschranke 4.
Der Schrittmotor 3 arbeitet mit einem Zählwerk, insbesondere mit einem Rechner 5, zusammen, der zunächst die Schritte des Schrittmotors zählt. Ist die eingegebene Probemenge nicht bekannt, dann kann auch so gearbeitet werden, daß die auf dem Drehteller abgelegte Menge nach Entleerung des Behälters abgestreift und einem Aufnahmegefäß (nicht dargestellt) zugeführt wird, so daß nachträglich die Menge gewichtsmäßig gemessen wird.
Damit wird deutlich, daß, wenn die Probemenge feststeht, beispielsweise 305 g, und die Anzahl der Schritte auch feststeht, beispielsweise 1531, dann das Schrittgewicht 5,02 Schritte pro g beträgt (Eichzahl).

Diese Eichzahl kann dem Rechner 5 eingegeben werden, so daß er denn automatisch im Zusammenhang mit dem Zählwerk bei jedem anderen gleichartigen Schüttgut feststellen kann, welches Gewicht durchgelaufen ist.

## Patentansprüche

1. Verfahren zur Bestimmung des Gewichts eines rieselfähigen Schüttgutes, dadurch gekennzeichnet, daß eine unbekannte Probemenge des Schüttgutes aus einem Behälter (1) auf einer schrittweise bewegten Unterlage abgelegt und die Schrittbewegung der Unterlage so lange aufrechterhalten wird, bis der Behälter leer ist, worauf die Anzahl der Schritte festgestellt wird.

2. Vorrichtung zur Durchführung des Verfahrens nach Anspruch 1, gekennzeichnet durch einen Behälter (1) mit einem unteren Auslaß (1a) und einem unter dem unteren Auslaß angeordneten Drehteller (2) als Unterlage für die Aufnahme des Schüttgutes, sowie einen Schrittmotor (3) für den Antrieb des Drehtellers, und durch ein mit dem Schrittmotor (3) zusammenarbeitendes Zählwerk, welches die Anzahl der Schritte feststellt.

3. Vorrichtung nach Anspruch 2, gekennzeichnet durch einen mit dem Drehteller (2) zusammenarbeitenden Abstreifer sowie ein Aufnahme-gefäß für die abgestreifte Schüttgutmenge.

4. Vorrichtung nach Anspruch 2, dadurch gekennzeichnet, daß der Drehteller (2) aus lichtdurchlässigem Material gefertigt ist.

5. Vorrichtung nach Anspruch 2, dadurch gekennzeichnet, daß der Drehteller (2) mit einer Einrichtung zur Feststellung des Behälterleerzustandes versehen ist, die mit dem Schrittmotor zusammenarbeitet.

6. Vorrichtung nach Anspruch 5, dadurch gekennzeichnet, daß die Einrichtung der Feststellung des Behälterleerzustandes ein System aus Sender und Empfänger, z.B. eine Lichtschranke, ist, die im Bereich des Drehtellers angebracht ist.

## Claims

1. Method of determining the weight of a bulk material which is capable of trickle flow, characterised in that an unknown sample amount of the bulk material is deposited from a container (1) on a support which is moved stepwise and the stepping movement of the support is maintained until the container is empty, whereupon the number of steps is ascertained.

2. Apparatus for carrying out the method according to claim 1 characterised by a container (1) having a lower outlet (1a) and a turntable (2) arranged below the lower outlet, as a support for receiving the bulk material, and also a stepping motor (3) for driving the turntable, and further characterised by a counter which co-operates with the stepping motor (3) to ascertain the number of steps.

3. Apparatus according to claim 2 characterised by a stripper which co-operates with the turntable (2) and a receiving vessel for the amount of bulk material which is stripped off.

4. Apparatus according to claim 2 characterised in that the turntable (2) is made from translucent material.

5. Apparatus according to claim 2 characterised in that the turntable (2) is provided with a means for detecting the container empty condition, which co-operates with the stepping motor.

6. Apparatus according to claim 5 characterised in that the means for detecting the container empty condition is a system comprising a transmitter and a receiver, for example a light barrier arrangement which is disposed in the region of the turntable.

## Revendications

1. Procédé de détermination du poids d'un produit en vrac susceptible de s'écouler, caractérisé en ce qu'il consiste à déverser une quantité inconnue du produit en vrac d'un récipient (1) sur un support déplacé pas à pas et à continuer à déplacer le support pas à pas jusqu'à ce que le récipient soit vide, puis à compter le nombre de pas.

2. Dispositif pour la mise en oeuvre du procédé suivant la revendication, caractérisé par un récipient (1), ayant une sortie (1a) inférieure et un plateau tournant (2), disposé sous la sortie inférieure et servant de support de réception du produit en vrac, ainsi qu'un moteur (3) pas à pas d'entraînement du plateau tournant, et par un compteur qui coopère avec le moteur (3) pas à pas et qui compte le nombre de pas.

3. Dispositif suivant la revendication 2, caractérisé par une racle coopérant avec le plateau tournant (2) ainsi que par un fût de réception du produit en vrac raclé.

4. Dispositif suivant la revendication 2, caractérisé en ce que le plateau tournant (2) est en matériau transparent.

5. Dispositif suivant la revendication 2, caractérisé en ce que le plateau tournant (2) est muni d'un dispositif qui détermine l'état de remplissage du récipient et qui coopère avec le moteur pas à pas.

6. Dispositif suivant la revendication 5, caractérisé en ce que le dispositif de détermination de l'état de remplissage du récipient est un système constitué d'un émetteur et d'un récepteur, par exemple, d'une cellule photoélectrique, qui est monté dans la zone du plateau tournant.
